(19) Europäisches Patentamt
European Patent Office
Office européen des brevets

(11) Veröffentlichungsnummer: **0 057 389**
**B1**

(12) # EUROPÄISCHE PATENTSCHRIFT

(45) Veröffentlichungstag der Patentschrift: **06.06.84**

(51) Int. Cl.³: **C 09 D 3/81**, C 25 D 13/00

(21) Anmeldenummer: **82100431.4**

(22) Anmeldetag: **22.01.82**

(54) **Hitzehärtbare Bindemittelmischung.**

(30) Priorität: **04.02.81 DE 3103642**

(43) Veröffentlichungstag der Anmeldung: **11.08.82 Patentblatt 82/32**

(45) Bekanntmachung des Hinweises auf die Patenterteilung: **06.06.84 Patentblatt 84/23**

(84) Benannte Vertragsstaaten: **AT BE CH DE FR GB IT LI NL SE**

(56) Entgegenhaltungen:
**FR - A - 1 326 616**

**PATENTS ABSTRACTS OF JAPAN, Band 4, Nr. 58, Seite 8C7 JP - A - 55021404 (DAINIPPON INK KAGAKU KOGYO K.K.) 15-02-1980**

(73) Patentinhaber: **BASF Farben + Fasern Aktiengesellschaft, Am Neumarkt 30, D-2000 Hamburg 70 (DE)**

(72) Erfinder: **Geist, Michael, Dr., Rubensstrassse 251, D-4400 Münster (DE)**
Erfinder: **Diefenbach, Horst, Dr., Lerchenhain 8, D-4405 Nottuln (DE)**

(74) Vertreter: **Habbel, Hans-Georg, Dipl.-Ing., Postfach 3429 Am Kanonengraben 11, D-4400 Münster (DE)**

EP 0 057 389 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine hitzehärtbare Bindemittelmischung auf Basis organischer Harze.

Zur Härtung durch Vernetzung der Bindemittel in Lackfilmen wurden vielerlei chemische Reaktionen vorgeschlagen und auch eingesetzt. Die während der Vernetzungsreaktion entstehenden chemischen Bindungen genügen häufig nicht allen Anforderungen, die an die Lackfilme gestellt werden. So sind Esterbindungen hydrolyseempfindlich, Aminogruppen können hydrophile Störstellen im eingebrannten Film bilden.

Bei 2-Komponenten-Systemen muß man oft eine der reaktiven Gruppen verkappen, um eine frühzeitige Reaktion zu unterbinden. Die während des Einbrennens dann freiwerdenden Verbindungen belasten, insbesondere im Falle von Aminen oder Phenolen, die Umwelt.

Für die Grundierung von elektrisch leitfähigen Substraten hat in den letzten Jahren die Elektrotauchlackierung weite Verbreitung gefunden. Im Vordergrund stand bisher die anodische Elektrotauchgrundierung. Die hierfür eingesetzten Harzbindemittel gehören zu den Carboxylgruppen enthaltenden Harzen, z. B. zu den Maleinatölen, maleinisierten Epoxidharzen, Alkydharzen, Acrylharzen und insbesondere zu den maleinisierten Polybutadienen. Durch Salzbildung, vornehmlich mit Aminen, wurden diese Harze wasserlöslich gemacht und an der Anode im Elektrotauchbad durch Gleichstrom abgeschieden. Das anodische Elektrotauchgrundierungsverfahren enthält jedoch schwerwiegende Nachteile. So wird während der elektrischen Abscheidung an der Anode Sauerstoff entwickelt, der die sich an der Anode abscheidenden Harze in schwerwiegender, nachteiliger Art und Weise verändern kann. Des weiteren gehen von der Anode Eisenionen in Lösung, die im eingebrannten Film als Störstellen enthalten sind und zur Verfärbung und Fleckenbildung führen. Qualitative Nachteile verursachen sie insbesondere durch Salzbildung und damit durch Herabsetzung der Wasserfestigkeit und des Korrosionsschutzes.

Das in den letzten Jahren zur Marktreife entwickelte kathodische Elektrotauchgrundierverfahren verdrängt in zunehmendem Maße das anodische Verfahren, da die oben beschriebenen Mängel weitgehend vermieden werden. So bildet sich an der Kathode, an der nun der Lackfilm abgeschieden wird, während des Abscheidevorganges Wasserstoff, der das Harzbindemittel nicht beeinflußt.

Die für die kathodische Abscheidung geeigneten Bindemittel enthalten überwiegend Aminogruppen, die zur Wasserlöslichmachung mit Säuren neutralisiert werden (DE-OS 2 345 044).

Nachteilig wirkt sich jedoch ein Verbleiben der hydrophilen Aminogruppen im eingebrannten Film aus, sie verursachen eine Verminderung des Korrosionsschutzes. Durch die Umsetzung der Aminogruppen mit blockierten Isocyanaten bei der Vernetzung wurden diese zwar in die weniger hydrophile Urethangruppe überführt, gleichzeitig werden aber die Blockierungsmittel, wie z. B. Phenol oder Ketoxime, freigesetzt.

Je nach Art der Konstitution der im Harz notwendigerweise enthaltenen Aminogruppen können diese auch durch die $\beta$-Eliminierung thermisch abgespalten werden (DE-OS 2 363 074, DE-OS 2 753 861). Die hieraus resultierende Verunreinigung der Abluft durch große Mengen der abgespaltenen Schutzgruppen der verkappten Isocyanate und Amine ist ebenfalls als Nachteil dieses Verfahrens anzusehen.

Es ist Aufgabe der Erfindung, diese Nachteile des Standes der Technik zu vermeiden und eine Bindemittelmischung zur Herstellung von Überzugsmitteln zu schaffen, die Überzüge mit hervorragenden technischen Eigenschaften ergeben. Durch die erfindungsgemäße Bindemittelmischung soll die Umweltbelastung bei der Applikation der entsprechenden Überzugsmittel herabgesetzt werden. Die Überzugsmittel auf Basis der erfindungsgemäßen Bindemittelmischung sollen ferner für alle Arten von Applikationsverfahren geeignet sein, d. h. die Bindemittelmischung soll für konventionell zu applizierende Einbrennlacke, für Pulverlacke, für wäßrige Pulver-Slurries und für Elektrotauchbäder verwendet werden können.

Die Aufgabe wird bei einer Bindemittelmischung der eingangs genannten Art erfindungsgemäß dadurch gelöst, daß sie aus den Komponenten

A) einem organischen Harz mit primären und/oder sekundären und gegebenenfalls auch zusätzlichen tertiären Aminogruppen und

B) einem Vernetzungsmittel auf Basis einer organischen Verbindung, der mindestens 2 $\beta$-Hydroxyalkylestergruppen enthält, besteht.

Aus der FR-A-1 326 616 ist die Verwendung von Aminoplastharzen in Kombination mit einer Polymerkomponente, die $\beta$-Hydroxyethylmethacrylat enthält, bekannt. Die Bezeichnung Aminoplastharze bedeutet hier nicht, daß diese Harze freie Aminogruppen enthalten. Die Harze sind methyloliert. Die bekannten Bindemittelkomponenten werden beim Einbrennen unter Verwendung eines sauren Katalysators miteinander umgesetzt. Hierbei tritt eine Kondensationsreaktion ein.

Bei der erfindungsgemäß bewirkten Vernetzungsreaktion reagieren die $\beta$-Hydroxyalkylestergruppen mit den freien Aminogruppen unter Ausbildung einer Amidbindung. Falls diese Reaktion katalysiert wird, werden auch keine sauren Katalysatoren eingesetzt, sondern es werden beispielsweise Ammoniumverbindungen oder Metallsalze verwendet.

In dem Patentreferat (PATENTS ABSTRACTS OF JAPAN, Band 4, Nr. 50) wird die Herstellung eines Harzes für die kathodische Abscheidung durch Umsetzung eines Epoxidharzes mit einer ungesättigten Carbonsäure und anschließenden Copolymerisation des erhaltenen Epoxidesters mit einem ethylenisch ungesättigten Monomer, das eine stickstoffhaltige basische Gruppe aufweist, beschrieben. Die Umsetzung zwischen den Epoxidgruppen und den Carboxylgruppen dient also zum Aufbau des Harzkörpers, und die entstehende $\beta$-Hydroxyalkylestergruppierung liegt innerhalb der Molekülkette. Sie steht damit aber für Vernetzungsreaktionen nicht zur Verfügung, denn eine Reaktion zwischen dieser Gruppierung und den Aminogruppen würde zu einer Unterbrechung der Molekülkette und damit zum Abbau des Harzes führen. Auf keinen Fall würde diese Reaktion zur Vernetzung beitragen. Das beschriebene Harz ist nur mit einer zusätzlichen, in dem Referat nicht beschriebenen Vernetzerkomponente härtbar.

Die erfindungsgemäße Bindemittelmischung enthält vorteilhaft zusätzlich zu den Komponenten A und B als Komponente C Pigmente, Füllstoffe, Vernetzungskatalysatoren, Korrosionsschutzinhibitoren und weitere Lackhilfsmittel.

Vorteilhaft betragen der Anteil der Komponente A 50—95 Gew.-% und der der Komponente B 5—50 Gew.-%, wobei die Summe der Komponenten A und B 100% beträgt.

Während des Einbrennvorganges reagieren nun die $\beta$-Hydroxyalkylestergruppen der Komponente B mit den primären und/oder sekundären Aminogruppen der Komponente A unter Bildung einer Amidbindung. Der basische Stickstoff der Aminogruppe des Harzes der Komponente A wird also in einen pH-neutralen Amidstickstoff im eingebrannten Film überführt. Der eingebrannte Film enthält somit keine basischen Störstellen. Der Vernetzungsmechanismus ist im Prinzip in folgendem Reaktionsschema beschrieben:

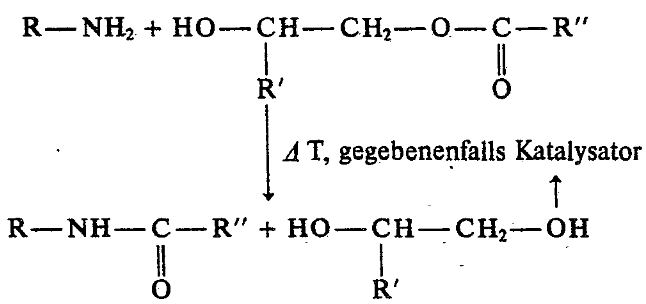


Beim Einbrennen werden praktisch keine Aminogruppen abgespalten und somit die Abluftprobleme reduziert. Die abgespaltenen Diole weisen vorzugsweise einen derartigen Siedepunkt auf, der sie während des Einbrennvorganges vorteilhaft als Verlaufshilfsmittel wirken läßt.

Die während des Einbrennens entstehende Amidbindung wirkt sich sehr vorteilhaft auf die Haftung des Films, insbesondere auf Metallsubstraten, aus. Ebenso wird hierdurch die Elastizität des Filmes gesteigert. Dieser Vernetzungsmechanismus bedingt eine hohe Beständigkeit des Lackfilms gegen Lösungsmittel, Alkalien und Salzsprühnebel. Bereits auf nicht vorbehandeltem Eisenblech bilden die Filme auch ohne Korrosionsschutzinhibitoren sehr resistente Überzüge aus.

Die Komponente A der Bindemittelmischung weist vorteilhaft eine zahlenmittlere Molmasse von 500 bis 20 000 auf, vorzugsweise von 600 bis 10 000. Das Aminäquivalentgewicht der Komponente A der Bindemittelmischung beträgt 150 bis 7500 und vorzugsweise 200 bis 5000.

Die Komponente A ist ein organisches Harz mit primären und/oder sekundären Aminogruppen. Gegebenenfalls können zusätzlich auch tertiäre Aminogruppen vorhanden sein.

Das Einführen der primären und/oder sekundären Aminogruppen in das organische Harz zur Herstellung der Komponente A erfolgt vorzugsweise durch Reaktion eines Polyamins und/oder eines amino- und/oder hydroxylgruppenhaltigen Ketimins mit Harzen, die mindestens eine, vorzugsweise mindestens zwei Epoxidgruppen oder Isocyanatgruppen je Molekül enthalten.

Die Komponente A kann aber auch durch andere Anlagerungsreaktionen erhalten werden, z. B. durch Verestern oder Amidieren von primäre und/oder sekundäre Aminogruppen tragenden Verbindungen mit hierfür geeignete Gruppen enthaltenden Harzen.

Als besonders geeignet für die Herstellung der Komponente A erweisen sich epoxidgruppenhaltige Harze mit vorzugsweise endständigen Epoxidgruppen aus der Gruppe der Polyglycidyläther, Polyglycidylester und der Polyglycidylamine.

Andere vorteilhaft geeignete epoxidgruppenhaltige Harze sind Copolymerisate von Acrylsäure- und/oder Methacrylsäureglycidylester oder einer anderen, eine Glycidylgruppe tragenden, olefinisch ungesättigten, polymerisierbaren Verbindung mit Alkyl- und/oder Hydroxyalkylestern der Acryl- und/oder Methacrylsäure, und/oder Vinylverbindungen wie Styrol, Vinyltoluol oder Vinylcarbazol.

Eine weitere bevorzugt geeignete Harzgruppe sind teilepoxidierte Polybutadienöle.

Unter Polyglycidyläther im Rahmen dieser Erfindung werden vorzugsweise solche Polyglycidyläther der allgemeinen Formel

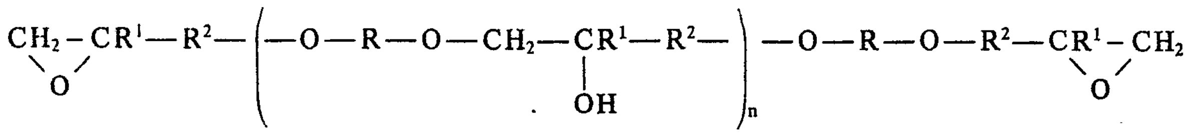

mit

R = 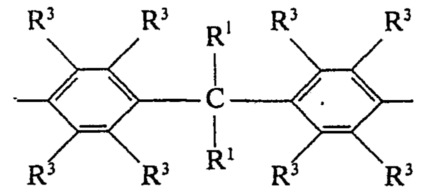

$R^1$ = H oder $C_nH_{2n+1}$
$R^2$ = $(CR^1_2)_n$
$R^3$ = $R^1$, Halogen und bevorzugt H
n = 0 bis 5

verstanden.

Die Polyglycidyläther der aufgeführten allgemeinen Formel haben eine zahlenmittlere Molmasse von etwa 340 bis 5000 und dementsprechend ein Epoxidäquivalentgewicht von 170 bis 2500. Die Epoxidharze können auch hydriert oder teilhydriert eingesetzt werden. Zur Steuerung der Filmeigenschaften kann ein Teil der reaktionsfähigen Gruppen des Epoxidharzes mit anderen Verbindungen umgesetzt werden. Hierfür bieten sich an:

a) Carboxylgruppenhaltige Verbindungen wie gesättigte oder ungesättigte Monocarbonsäuren (z. B. Benzoesäure, Leinölfettsäure, 2-Äthylhexylsäure, Versaticsäure), aliphatische, cycloaliphatische und/oder aromatische Dicarbonsäuren verschiedener Kettenlängen (z. B. Adipinsäure, Sebacinsäure, Isophthalsäure oder dimere Fettsäuren), Hydroxyalkylcarbonsäuren (z. B. Milchsäure, Dimethylolpropionsäure) sowie carboxylgruppenhaltige Polyester oder
b) Aminogruppenhaltige Verbindungen wie Diäthylamin oder Äthylhexylamin oder Diamine mit sekundären Aminogruppen, wie z. B. N,N'-Dialkylalkylendiamin wie Dimethyläthylendiamin, N,N'-Dialkyl-polyoxialkylenamin wie N,N'-Dimethyl-polyoxipropylendiamin, cyanalkylierte Alkylendiamine wie Bis-N,N'-Cyanäthyl-äthyldiamin, cyanalkylierte Polyoxialkylenamine wie Bis-N,N'-Cyanäthyl-polyoxipropylendiamin, Polyaminoamide wie Versamide® (Schering AG) oder das Umsetzungsprodukt von einem Mol Diaminohexan mit zwei Molen Monoglycidyläther oder Monoglycidylester, speziell Glycidylester $\alpha$-verzweigter Fettsäuren wie der Versaticsäure, oder
c) Hydroxylgruppenhaltige Verbindungen wie Neopentylglykol, bisäthoxyliertes Neopentylglykol, Hydroxypivalinsäureneopentylglykolester, Dimethylhydantoin-N,N'-diäthanol, Hexandiol-1.6, Hexandiol-2.5, Buten-2-diol-1.4, Butin-2-diol-1.4, Hexin-3-diol-2.5 oder andere Alkindiole, 1.4-Bis-(hydroxymethyl)-cyclohexan, 1.1-Isopropyliden-bis-(p-phenoxy)-2-propanol, Trimethylolpropan, Pentaerythrit oder Aminoalkohole wie Triäthanolamin, Methyldiäthanolamin oder hydroxylgruppenhaltige Alkylketimine wie Aminomethylpropan-diol-1,3-methyl-isobutylketimin oder Tris-(hydroxymethyl)-aminomethan-cyclohexanonketimin sowie auch Polyglykoläther, Polyesterpolyole, Polyätherpolyole, Polycaprolactonpolyole, Polycaprolactampolyole verschiedener Funktionalität und Molekulargewichte.

Anstelle der Polyglycidyläther auf Basis Bisphenol A können auch Polyglycidyläther auf Basis anderer Grundkomponenten, z. B. Heterocyclen, wie Diglycidylhydantoine oder auch Triglycidylisocyanurat eingesetzt werden.

Geeignete Polyglycidylester sind epoxidgruppenhaltige Harze, die durch Einführen von Glycidylgruppen in COOH-funktionelle Harze, z. B. über Epichlorhydrin hergestellt werden können. Das Epoxidäquivalentgewicht dieser Produkte liegt zwischen 200 bis 2500. Zur Steuerung der Filmeigenschaften kann ein Teil der verbliebenen, reaktiven Glycidylgruppen mit anderen Verbindungen umgesetzt werden. Hierfür bieten sich die oben unter a, b und c genannten Verbindungen an.

Unter Polyglycidylaminen werden solche glycidylgruppenhaltigen Harze verstanden, die man durch Einführung von Glycidylgruppen über z. B. Epichlorhydrin in $NH_2$-funktionelle Harze erhält.

Bevorzugt geeignet sind auch Copolymerisate von Acryl- und/oder Methacrylsäureglycidylester oder einer anderen, eine Glycidylgruppe tragende, olefinisch ungesättigten, polymerisierbaren Verbindung mit Estern der Acryl- und/oder Methacrylsäure sowie polymerisierbaren Vinylverbindungen, die eine zahlenmittlere Molmasse von 700 bis 10 000 und ein Epoxidäquivalentgewicht von 600 bis 3000 aufweisen. Bevorzugt sind die Acrylsäureester mit $C_2$- bis $C_8$-Alkoholen und die Methacrylsäureester mit $C_1$- bis $C_4$-Alkoholen. Die Copolymerisate können weitere Monomere enthalten wie Hydroxyalkyl-(meth)acrylat oder (Meth)acrylamid. Die Copolymerisation erfolgt in wohlbekannter Weise durch Lösungs-, Suspensions- oder Emulsionspolymerisation mit Zusatz radikalischer Initiatoren wie Peroxiden, Hydroperoxiden, Perestern oder thermolabiler Azoverbindungen sowie gegebenenfalls Molekulargewichtsreglern.

Unter teilepoxidierten Polybutadienölen werden Umsetzungsprodukte verstanden, die durch Reaktion von handelsüblichen Polybutadienölen mit Persäuren bzw. organischen Säure-$H_2O_2$-Mischungen erhalten werden. Die Darstellungsmethode wird z. B. in der Chemiker-Zeitung 95, 857f (1971) beschrieben.

Die epoxidgruppenhaltigen Harze werden mit Polyaminen und/oder einem amino- und/oder hydroxylgruppenhaltigen Ketimin zur Komponente A umgesetzt. Wird die Anlagerung der primären und sekundären Aminogruppen tragenden Verbindungen in Form ihrer Ketimine durchgeführt, so sind die Reaktionsbedingungen so zu führen, daß im Reaktionsprodukt keine die Ketimine zersetzende Substanzen verbleiben. Bei den bevorzugten Ketiminen handelt es sich um Umsetzungsprodukte aus Ketonen und hydroxyl- oder sek. Aminogruppen enthaltene Alkylamine oder Alkyldiamine mit der allgemeinen Struktur

$R-NH-R-NH_2$ bzw. $HO-R-NH_2$.

Die Ketimine weisen z. B. folgende Struktur auf:

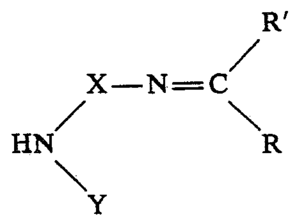

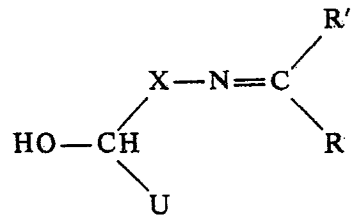

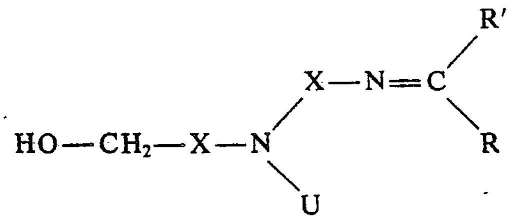

wobei bedeuten:

$X = -(CR_2)_n-$

$R = -H, -R'$

$R' = -C_mH_{2m+1}, -C_6H_{11}$

$U = -R, -Y$

Y = 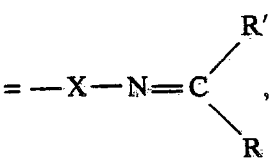, —X—OH, —R′ oder 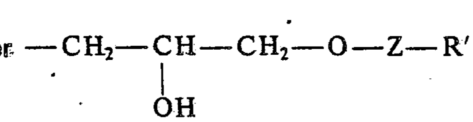

Z = 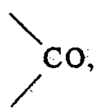, -X

$n = 1-6$

$m = 1-12$

Die zur Reaktion mit den primären Aminogruppen eingesetzten Ketone sind im allgemeinen aliphatische Ketone wie Methyläthylketon, Diäthylketon, Methylisobutylketon, Äthyl-n-propylketon und cycloaliphatische Ketone wie Cyclopentanon und Cyclohexanon. Bei den bevorzugten Aminoalkylaminen und Alkanolaminen handelt es sich überwiegend um Diäthylentriamin, N-Methyl-äthylendiamin, N-Methyl-propylendiamin, N-Aminoäthyl-piperazin, 2-Aminoäthanol, 1-Aminopropanol-2, 1-Aminopropanol-3, 2-Amino-2-methyl-propanol-1, 3-Amino-2.2-dimethyl-propanol-1, 1.5-Diamino-pentanol-3 oder N-(2-Aminoäthyl)-N-(2-hydroxyäthyl)-äthylendiamin.

Die exotherme Addition der oben beschriebenen Aminoketimine an den Epoxidgruppen des Basisharzes der Bindemittelkomponente A erfolgt im allgemeinen bei Raumtemperatur. Zur vollständigen Umsetzung wird die Reaktion häufig bei Temperaturen zwischen 50 und 125° C beendet.

Die Addition der Hydroxyketimine an die Epoxidgruppen des Basisharzes der Bindemittelkomponente A erfolgt in der Regel im gleichen Temperaturbereich, jedoch ist die Verwendung eines basischen Katalysators wie N,N-Dimethylbenzylamin oder auch eines Friedel-Crafts-Katalysators wie Zinn-II-Chlorid ratsam.

Als Basisharz zur Herstellung der Bindemittelkomponente A können auch Basisharze mit mindestens 2 Isocyanatgruppen eingesetzt werden. Bevorzugte Isocyanatgruppen enthaltende Harze sind höherfunktionelle Polyisocyanate, die durch Trimerisation oder Oligomerisation aus Diisocyanaten oder Polyisocyanaten und polyfunktionellen OH- oder NH-Gruppen enthaltenden Verbindungen dargestellt werden. Typische Isocyanate sind Toluylendiisocyanat, Hexamethylendiisocyanat, 4,4'Diphenylmethandiisocyanat, 4,4'-Dicyclohexylmethandiisocyanat, 1,6-Diisocyanato-2,2,4-trimethylhexan und 1-Isocyanato-methyl-3-isocyanato-1,5,5-trimethylcyclohexan. Des weiteren können isocyanathaltige Präpolymere auf Basis von Polyglykoläthern, Polyesterpolyolen, Polyätherpolyolen, Polycaprolactonpolyolen, Polycaprolactampolyolen oder Polyaminoamiden mit Vorteil eingesetzt werden.

Die Bindemittelkomponente B, das Vernetzungsmittel, ist eine Verbindung, die mindestens 2 $\beta$-Hydroxyalkylestergruppen enthält. Das Vernetzungsmittel kann eine niedermolekulare Verbindung oder ein entsprechend substituiertes Harz sein. Wird zur Veresterung kein Alkohol mit einer zusätzlichen OH-Gruppe am $\beta$-Kohlenstoffatom eingesetzt, sondern Monoalkohole wie Methyl-, Äthyl- oder Butylalkohol, so läuft die Amidierungsreaktion wesentlich langsamer ab.

Die Vernetzungsrate ist in diesem Fall zu gering, der eingebrannte Film ist gegen Lösungsmittel nicht ausreichend beständig. Diese Nachteile werden umgangen, wenn erfindungsgemäß $\beta$-Hydroxyalkylester zur Amidierungsreaktion eingesetzt werden. Die Verbindungen, die den Vernetzer bilden, sind bevorzugt Polyesterharze, es können aber auch andere Verbindungen eingesetzt werden, die freie Carboxylgruppen enthalten und einer Veresterung zugänglich sind. Diese Verbindungen können des weiteren primäre, sekundäre oder tertiäre Stickstoffatome enthalten, die mit Säure zu protonisieren sind. Damit die Harze wasserlöslich werden, können sie auch mit Ammoniumgruppen oder durch Sulfid/Säure- oder Phosphin/Säuremischungen modifiziert werden. Derartige Harze sind z. B. für die Elektrotauchlackierung geeignet.

Bevorzugt werden als Umesterkomponente Poly-(2-Hydroxyalkyl)ester von Polycarbonsäuren eingesetzt. Hierzu gehören neben anderen

Bis-(2-hydroxypropyl)-azelat
Bis-(2-hydroxypropyl)-succinat
Bis-(2-hydroxybutyl)-adipat
Bis-(2-hydroxybutyl)-maleinat
Bis-(2-hydroxybutyl)-terephthalat

Polyfunktionelle Vernetzer können vorteilhaft auf folgende Weise dargestellt werden. Zuerst werden äquivalente Anteile eines Dicarbonsäureanhydrids (Phthalsäureanhydrid, Hexahydrophthalsäureanhydrid, Trimellithsäureanhydrid, Succinsäureanhydrid) mit einem Polyol (Glycerin, Trimethylolpropan, Pentaerythrit, Dipentaerythrit) bei Temperaturen unterhalb 145° C umgesetzt. Das entstandene saure Zwischenprodukt wird dann mit äquivalenten Anteilen eines Epoxyalkans zum Endprodukt umgesetzt.

Der Vernetzer kann auch ein maleinisiertes Polybutadienöl sein. Die Einführung der $\beta$-Hydroxyalkylestergruppen kann z. B. über den nachstehend beschriebenen Reaktionsweg erfolgen. Der Anhydridring des an das Polybutadien angelagerten Maleinsäureanhydrids wird zunächst mit einem Dialkylaminoalkanol folgender allgemeiner Struktur geöffnet.

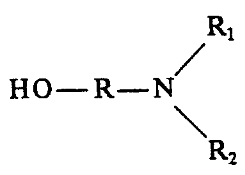

$R, R_1, R_2 = -(CH_2)_n-H$

$n = 1-8$

Die bei der Öffnung des Anhydrids entstehende Säuregruppe wird anschließend mit einem Monoepoxid umgesetzt, um den gewünschten $\beta$-Hydroxyalkylester darzustellen. Je nach dem Maleinisierungsgrad ist es vorteilhaft, eine Mischung aus dem beschriebenen Dialkylaminoalkanol und einem Monoalkohol wie Propanol oder Butanol zu verwenden, um den Anteil an tertiären Stickstoffatomen in der Vernetzerkomponente zu begrenzen.

Vorteilhaft ist die Komponente B ein Polyacrylatharz aus den folgenden Monomeren:

a) 10—50 Gew.-% Acrylsäurealkylester mit 1 bis 18 Kohlenstoffatomen im Alkylrest und/oder Methacrylsäureester mit 2 bis 8 Kohlenstoffatomen im Alkylrest,

b) 0—60 Gew.-% Methacrylsäuremethylester,
c) 0—35 Gew.-% Styrol, $\alpha$-Methylstyrol, o- und/oder p-Chlorstyrol, p-tert.-Butylstyrol, Vinyltoluol und/oder Vinylcarbazol und
d) 2—35 Gew.-% Acrylsäure- und/oder Methacrylsäure-$\beta$-Hydroxylalkylester- oder einer anderen $\beta$-Hydroxylalkylestergruppen enthaltenden olefinischen, ungesättigten polymerisierbaren Verbindung, wobei die Summe der Bestandteile a, b, c und d 100% beträgt.

Die erfindungsgemäße Bindemittelmischung kann in feinteiliger, fester Form oder gelöst in einem organischen Lösungsmittel vorliegen.

Für die Elektrotauchlackierung ist es erforderlich, daß die Bindemittelmischung nach Protonisierung mit Säure in Form einer wäßrigen Lösung oder Dispersion vorliegt. Die Wasserlöslichkeit der Bindemittelkomponente A und/oder der Vernetzerkomponente B wird durch Neutralisation der in ihnen enthaltenen primären, sekundären und/oder tertiären Aminogruppen mit Säuren bewirkt. Geeignete Säuren sind insbesondere organische Säuren, es kann jedoch auch beispielsweise Salzsäure, Schwefelsäure, Phosphorsäure oder Kohlensäure eingesetzt werden. Bevorzugt werden die Aminogruppen mit Ameisensäure, Essigsäure, Malonsäure, Milchsäure oder Zitronensäure neutralisiert.

Die genannten Säuren können auch verwendet werden, wenn die Einführung der solubilisierenden Gruppen für die Bindemittelkomponente und/oder die Vernetzerkomponente durch Anlagerung einer Ammoniumgruppe oder dem Salz einer Sulfid/Säure- oder Phosphin/Säuremischung an des Bindemittel oder den Vernetzer erfolgt.

Der Neutralisationsgrad der solubilisierenden Gruppen liegt, bezogen auf diese Gruppen, zwischen 0,2 bis 1,0 Äquivalent und bevorzugt zwischen 0,25 bis 0,6 Äquivalente Säure.

Die Neutralisation kann auf folgenden Wegen durchgeführt werden. Die Säure in Wasser, gegebenenfalls zusammen mit Dispergierhilfsmittel, vorgelegt und die Harzlösung wird bei Raumtemperatur oder gegebenenfalls bei erhöhten Temperaturen in das Wasser eingerührt. Die Säure kann aber auch direkt zur Harzlösung zugegeben werden. Die neutralisierte Harzlösung kann nun in das Wasser eingerührt werden, gegebenenfalls kann man das Wasser auch langsam in die Harzlösung einarbeiten.

Die Dispersion kann zur Steuerung ihrer Viskosität, der Abscheidespannung und des Verlaufs bis zu 20% organische Lösungsmittel enthalten. Enthält der Ansatz durch das gewählte Darstellungsverfahren zuviel oder gar für die Eigenschaften schädliche Lösungsmittel, so kann man diese vor dem Dispergieren aus der Harzlösung herausdestillieren oder man destilliert sie aus der wäßrigen Dispersion ab. Vorteilhaft für die Summe aller Eigenschaften ist ein möglichst geringer Anteil an organischen Lösungsmitteln.

Der Festkörper eines Abscheidebades, das mit der erfindungsgemäßen Dispersion angesetzt ist, beträgt in der Regel 7—35 Gew.-Teile, bevorzugt aber 12—25 Gew.-Teile. Der pH-Wert des Abscheidebades liegt zwischen 4 und 8, vorzugsweise aber zwischen 5 und 7,5. Als Anoden des Abscheidebades werden nicht korrodierende Stahlanoden oder Graphitanoden verwendet. Die Temperatur des Badansatzes soll zwischen 15 bis 35°C, bevorzugt zwischen 20 und 30°C liegen. Die Abscheidedauer und -spannung werden so gewählt, daß die gewünschte Schichtstärke erreicht wird.

Nach der Abscheidung wird der beschichtete Gegenstand abgespült und ist zum Einbrennen bereit.

Unabhängig von dem Applikationsverfahren der auf Basis der erfindungsgemäßen Bindemittelmischung hergestellten Überzugsmittel erfolgt die Vernetzung des Lackfilms während des Einbrennens bei Temperaturen von 130 bis 200°C über eine Zeitdauer von 10—60 Minuten, bevorzugt bei 150 bis 180°C während 15—30 Minuten.

Die Amidierungsreaktion kann durch geeignete Katalysatoren noch beschleunigt werden. Hierzu sind insbesondere geeignet Ammoniumverbindungen wie Benzyltrimethylammoniumhydroxid, Benzyltrimethylammoniumchlorid, Trimethylcetylammoniumbromid oder Tetraammoniumjodid und organische Zinnverbindungen wie Dibutylzinndilaurat und Eisen-III-acetylacetonat, Zinkacetat, Zink-2-äthylhexoat, Kobaltnaphthenat, Bleiacetat oder Butyltitanat.

Die Pigmentierung erfolgt in wohlbekannter Weise. Hierbei können die Pigmente sowie die üblichen Zusatzstoffe wie Füllstoffe, Korrosionsschutzinhibitoren und Antischaummittel in einer der beiden Bindemittelkomponenten angemahlen werden. Als Mahlaggregate können z. B. Sandmühlen, Kugelmühlen oder Dreiwalzen verwendet werden. Die Komplettierung des Lackes kann, wie allgemein bekannt, erfolgen.

Die Einzelkomponenten A und B und gegebenenfalls die Komponente C können in Form ihrer konzentrierten Lösungen bzw. Dispersionen gemischt und gemeinsam dispergiert werden. Es ist aber auch möglich, die Komponenten A und B einzeln, wobei die Pigmente in A oder B angerieben sind, zu dispergieren und die Dispersion der Einzelkomponenten in dem erforderlichen Verhältnis zu vermischen. In einer weiteren vorteilhaften Ausführungsform ist es auch möglich, die Komponente A in Gegenwart der Komponente B herzustellen.

Die Erfindung betrifft ferner ein Verfahren zum Herstellen von Überzügen durch Aufbringen eines Überzugsmittels auf ein Substrat in Form eines Filmes durch Einbrennen, wobei das Überzugsmittel eine Bindemittelmischung enthält, die dadurch gekennzeichnet ist, daß die Mischung aus den Komponenten

A) einem organischen Harz mit primären und/oder sekundären und gegebenenfalls auch zusätzlichen tertiären Aminogruppen und
B) einem Vernetzungsmittel auf Basis einer organischen Verbindung, die mindestens 2 β-Hydroxyalkylestergruppen enthält, besteht.

Vorteilhafte Ausgestaltungen des erfindungsgemäßen Verfahrens ergeben sich aus den Unteransprüchen 11 bis 20.

Die Erfindung betrifft weiterhin die Verwendung einer Bindemittelmischung für die Herstellung von Überzügen, die dadurch gekennzeichnet ist, daß die Mischung aus den Komponenten

A) einem organischen Harz mit primären und/oder sekundären und gegebenenfalls auch zusätzlichentertiären Aminogruppen und
B) einem Vernetzungsmittel auf Basis einer organischen Verbindung, die mindestens 2 β-Hydroxyalkylestergruppen enthält, besteht.

Vorteilhafte Ausgestaltungen der erfindungsgemäßen Verwendung ergeben sich aus den Unteransprüchen 22 bis 33.

Im folgenden wird die Erfindung anhand von Ausführungsbeispielen näher erläutert.

Beispiel 1

(Herstellung einer Komponente B)

109 g Pentaerythrit werden mit 474 g Phthalsäureanhydrid in einem 4-Halskolben mit Rückflußkühler, Rührer, Innenthermometer und Gaseinleitung vermengt und unter Stickstoff auf 140° C aufgeheizt. Die Reaktion verläuft danach exotherm und wird durch Kühlen bei 160° C gehalten. Bei einer Säurezahl von 305 wird der Ansatz gekühlt und mit 300 g MIBK versetzt. Bei 90° C werden langsam 231 g Butylenoxid zugetropft und der Ansatz bei der Temperatur gehalten, bis die Säurezahl auf Null gefallen ist.

Beispiel 2

(Herstellung einer Komponente B)

1584,6 g Hexahydrophthalsäure werden mit 511,0 g Triäthanolamin in einem Reaktionskolben auf 130° C erwärmt. Danach springt die Reaktion an und die Temperatur steigt an. Durch externe Kühlung wird die Temperatur auf 160° C gehalten. Ist eine Säurezahl von 275 erreicht, kühlt man den Ansatz auf 90° C ab und gibt 900 g Methyläthylketon zu. Danach werden langsam 596,8 g Propylenoxid zugetropft. Die Reaktion wird solange bei 90° C durchgeführt, bis die Säurezahl $< 3$ ist.

Beispiel 3

(Herstellung einer Komponente B)

2340 g Glycidylester der 2-Methyl-2-Äthylheptansäure werden mit 2073 g Trimellithsäureanhydrid in einem Reaktionsgefäß auf 130° C erhitzt. Hierbei springt die stark exotherme Reaktion an. Durch externe Kühlung wird die Reaktion bei 150° C gehalten, bis eine Säurezahl von 183 erreicht ist. Danach kühlt man auf 90° C ab und setzt 1450 g Methylisobutylketon zu. Anschließend tropft man 835 g Propylenoxid langsam zu. Bei einer Säurezahl $< 2$ wird die Reaktion abgebrochen. Der Festkörper der Harzlösung ist 75%.

Beispiel 4

(Herstellung einer Komponente B)

560 g Xylol werden unter Stickstoff in einem 5-l-Reaktor vorgelegt und auf Rückflußtemperatur erhitzt. Innerhalb von 4,5 Stunden wird eine Monomermischung aus 1400 g Methylmethacrylat, 560 g 2-Hydroxypropylacrylat und 840 g Äthylhexylmethacrylat sowie 14 g Dodecylmercaptan zugetropft. Gleichzeitig wird 140 g tert.-Butylperoctoat in 200 g Xylol zudosiert. Anschließend wird bis zum Erreichen einer konstanten Viskosität von 4, 1 dPa · s, 50%ig in Xylol, nachpolymerisiert.

Das zahlenmittlere Molekulargewicht, gemessen durch Gelpermeationschromatographie, beträgt 2100, die OH-Zahl 80.

Beispiel 5

A. In einem 4-l-Reaktor werden 1188 Gew.-Teile Bis-(4-hydroxycyclohexyl)-2.2-propanbisglycidyläther, 308 Gew.-Teile Bisphenol A, 675 Gew.-Teile Polytetrahydrofuran (Molekulargewicht 1000) und 189 Gew.-Teile Xylol vorgelegt. Als Katalysator werden 5 Gew.-Teile Dimethylbenzylamin zugesetzt. Die Mischung wird auf 170°C erhitzt und eine halbe Stunde bei dieser Temperatur gehalten. Danach kühlt man auf 136°C ab und gibt weitere 10 Gew.-Teile Dimethylbenzylamin zu. Man hält die Temperatur, bis ein Epoxyäquivalentgewicht von 1500 erreicht ist. Danach kühlt man auf 85°C ab und gibt 725 Gew.-Teile der 75%igen Vernetzerlösung (Komponente B gemäß Beispiel 3) zu. Man läßt die Temperatur wieder auf 85°C ansteigen und setzt 515 Gew.-Teile einer 70%igen Lösung aus 1 Mol. Diäthylentriamin und 2 Mol. Methylisobutylketon zu. Der Ansatz erwärmt sich hierbei. Durch externe Kühlung hält man die Temperatur für 60 Minuten zwischen 95 und 100°C.

B. Inzwischen wurde eine Mischung aus 4070 Gew.-Teilen entionisiertem Wasser, 81 Gew.Teilen Essigsäure und 21 Gew.-Teilen eines handelsüblichen Entschäumers auf Basis eines langkettigen Alkohols vorbereitet. In dieser Mischung wird nun die in A beschriebene Harzlösung dispergiert. Die Dispersion weist einen Festkörper von 40% auf und einen Neutralisationsgrad der Amingruppen von 33%. Nach einer Stunde setzt man weitere 970 Gew.-Teile Wasser zu, um einen Festkörper von 35% einzustellen.

Beispiel 6

A. Der im Beispiel 5A beschriebene Ansatz wurde wiederholt und bei Raumtemperatur mit einer Wasser-Essigsäure-Mischung (162 g Essigsäure + 64 g Wasser) versetzt, um eine 100%ige Neutralisation der Amingruppen zu bewirken. Anschließend wurde mit entionisiertem Wasser auf einen Festkörper von 50% verdünnt.

B. Aus den Komponenten

| | |
|---|---|
| 2380 g | der nach Beispiel 6A erhaltenen 50%igen Harzlösung, |
| 1670 g | Kohlestaub, |
| 200 g | Bleisilicat und |
| 1200 g | entionisiertem Wasser |

wurde in einem Mahlaggregat eine Pigmentpaste mit einer Hegman-Feinheit von 6 bis 7 hergestellt. Danach wurde weiteres entionisiertes Wasser zugegeben. Die Pigmentpaste hatte einen Feststoffgehalt von 56,1%, einen Harzgehalt von 21,8% und einen Pigmentfeststoffgehalt von 34,3%. Die Paste weist eine ausgezeichnete thermische Beständigkeit bei der Lagerung auf.

Beispiel 7

287,5 g der in Beispiel 5B beschriebenen Bindemittelmischung und 178 g der in Beispiel 6B beschriebenen Pigmentpaste werden 2434,5 g entionisiertem Wasser versetzt. Der Festkörper des resultierenden Abscheidebades beträgt 16%. Der pH-Wert beträgt 7,5. Die Durchbruchsspannung des Bades liegt bei 370 bis 380 V. Mit Zinkphosphat behandelte Stahlbleche wurden bei einer Badtemperatur von 25°C und 300 Volt 120 Sekunden beschichtet. Es resultierten hierbei Filme, die nach 20 Minuten Einbrennen bei 160°C eine glatte, gut haftende Schicht von 30 µm ergaben.

Beispiel 8

(Herstellung einer Komponente A)

In einem 6-l-Reaktor werden 3380 g teilepoxidiertes Polybutadien (Mol.-Gew. 2600, 4,8 Gew.-% Epoxidsauerstoff) mit 1453 g einer 90%igen Lösung des Ketimins aus Mono-isopropanolamin und Methyläthylketon in Methyläthylketon versetzt und 32,5 g Phenol als Katalysator zugegeben. Die Mischung wird auf 160°C erhitzt und bei dieser Temperatur gehalten, bis kein Epoxidsauerstoff mehr nachzuweisen ist. Danach kühlt man den Ansatz auf 90°C ab und dispergiert ihn in einer Mischung aus 6210 g entionisiertem Wasser, 281 g Milchsäure und 55 g des in Beispiel 5B beschriebenen Entschäumers. Die Dispersion weist einen Festkörper von 40% und einen Neutralisationsgrad der Amingruppen von 40% auf.

Beispiel 9

2400 g der in Beispiel 2 beschriebenen Vernetzerkomponente B werden in einer Mischung aus 205 g Milchsäure und 1000 g entionisiertem Wasser dispergiert. Zu dieser Harzlösung werden 780 g Kohlestaub, 150 g Eisenoxidbraun und 75 g Strontiumchromat gegeben. Die Ausgangsstoffe werden mit 890 g entionisiertem Wasser vermengt und auf eine Hegman-Feinheit von 5 bis 7 in einem Mahlaggregat zerkleinert. Die Pigmentpaste hat einen Vernetzeranteil von 32,7% und einen Pigmentanteil von 18,3%.

Beispiel 10

500 Gew.-Teile der nach Beispiel 8 erhaltenen Komponente A und 196 Gew.-Teile der nach Beispiel 9 erhaltenen Pigmentpaste werden mit 804 Gew.-Teile entionisiertem Wasser vermischt. Der Gehalt an nicht flüchtigen Anteilen des Badansatzes beträgt 20%. Dieses Abscheidebad zeigt einen pH-Wert von 6,2. Filme, die auf zinkphosphatierten Blechen im Verlauf von 2 Minuten bei 300 Volt abgeschieden und bei 170° C 30 Minuten eingebrannt werden, zeigen eine glatte, harte nicht vergilbte Oberfläche. Die Filmdicke beträgt 25 µm. Die Haftung auf den Blechen ist hervorragend.

Beispiel 11

In einem 4-l-Reaktor werden 1188 Gew.-Teile Bis-(4-hydroxycyclohexyl)-2.2-propanbisglycidyläther, 308 Gew.-Teile Bisphenol A, 675 Gew.-Teile Polytetrahydrofuran (Molekulargewicht 1000) und 190 Gew.-Teile Xylol vorgelegt. Als Katalysator werden 5 Gew.-Teile Dimethylbenzylamin zugesetzt. Die Mischung wird auf 170° C erhitzt und eine halbe Stunde bei dieser Temperatur gehalten. Danach kühlt man auf 136° C ab und gibt weitere 10 Gew.-Teile Dimethylbenzylamin zu. Man hält die Temperatur, bis ein Epoxyäquivalent von 1500 erreicht ist. Danach kühlt man auf 85° C ab und gibt 725 Gew.-Teile der 75%igen Vernetzerlösung (Komponente B) gemäß Beispiel 3 zu. Man läßt die Temperatur wieder auf 85° C ansteigen und setzt 515 Gew.-Teile einer 70%igen Lösung aus 1 Mol. Diäthylentriamin und 2 Mol. Methylisobutylketon zu. Der Ansatz erwärmt sich hierbei. Durch externe Kühlung hält man die Temperatur für 60 Minuten zwischen 95 und 100° C.

Anschließend werden 0,5 Gew.-Teile, bezogen auf den Gesamtfestkörper, Dibutylzinndilaurat als Vernetzungskatalysator zugegeben. Mit Solventnaphtha wird der Ansatz auf eine geeignete Verarbeitungsviskosität als Klarlack eingestellt. Der Klarlack läßt sich bei 160° C innerhalb von 20 Minuten zu einem transparenten, glänzenden Überzug aushärten.

Beispiel 12

In einem 6-l-Reaktor werden 3380 g teilepoxidiertes Polybutadien (Mol.-Gew. 2600, 4,8 Gew.-% Epoxidsauerstoff) mit 1453 g einer 90%igen Lösung des Ketimins aus Monoisopropanolamin und Methyläthylketon in Methyläthylketon versetzt und 32,5 g Phenol als Katalysator zugegeben. Die Mischung wird auf 160° C erhitzt und bei dieser Temperatur gehalten, bis kein Epoxidsauerstoff mehr nachzuweisen ist. Danach kühlt man den Ansatz auf 90° C ab und fügt 30 Gew.-%, bezogen auf den Festkörper, der den Vernetzer enthaltenden Lösung des Beispiels 2 zu. Durch Zugabe von Methyläthylketon wird ein spritzfähiger Klarlack hergestellt. Der Film wird 30 Minuten bei 150° C eingebrannt und weist danach eine hervorragende Elastizität auf.

Beispiel 13

137 g Diäthylentriamin werden in einem Reaktionsgefäß vorgelegt und auf 80° C erwärmt. Hierzu läßt man über einen Zeitraum von 3 Stunden 1482 g einer 75%igen Lösung eines handelsüblichen Epoxidharzes auf Basis von Bisphenol A mit einem Epoxidäquivalentgewicht von 800 bis 900 in Methyläthylketon zufließen. Danach erhöht man die Temperatur auf 90° C und hält diese Temperatur für eine Stunde. Hierauf wird im Vakuum das Lösungsmittel sorgfältig entfernt. Die erhaltene Schmelze wird in eine Wanne gegossen und nach dem Erkalten gebrochen und gemahlen.

Das oben beschriebene Bindemittel wird nun mit 25 Gew.-% des vom Lösungsmittel befreiten Vernetzers gemäß Beispiel 1 und 60 Gew.-% Titandioxid (Rutil-Typ) in einem Extruder homogenisiert.

Nach der üblichen Aufarbeitung erhält man einen für das elektrostatische Pulversprühverfahren geeigneten Pulverlack. Die Filme werden 20 Minuten bei 160° C eingebrannt. Man erhält rein weiße, glänzende Filme. Das Pulver eignet sich ebenfalls für eine Naßanmahlung in Wasser und eine Verarbeitung als »aquenous powder slurry«.

**Patentansprüche**

1. Hitzehärtbare Bindemittelmischung auf Basis organischer Harze, dadurch gekennzeichnet, daß sie aus den Komponenten

A) einem organischen Harz mit primären und/oder sekundären und gegebenenfalls auch zusätzlichen tertiären Aminogruppen und
B) einem Vernetzungsmittel auf Basis einer organischen Verbindung, die mindestens 2 β-Hydroxyalkylestergruppen enthält, besteht.

2. Bindemittelmischung nach Anspruch 1, dadurch gekennzeichnet, daß sie zusätzlich zu den Komponenten A und B als Komponente C Pigmente, Füllstoffe, Vernetzungskatalysatoren, Korrosionsschutzinhibitoren und weitere Lackhilfsmittel enthält.
3. Bindemittelmischung nach Anspruch 1 und 2, dadurch gekennzeichnet, daß der Anteil der Komponente A 50—95 Gew.-% und der der Komponente B 5—50 Gew.% betragen, wobei die Summe der Komponenten A und B 100% beträgt.
4. Bindemittelmischung nach Anspruch 1 bis 3, dadurch gekennzeichnet, daß die Komponente A eine zahlenmittlere Molmasse von 500—20 000 aufweist.
5. Bindemittelmischung nach Anspruch 1 bis 4, dadurch gekennzeichnet, daß die Komponente B eine zahlenmittlere Molmasse von 200—10 000 aufweist.
6. Bindemittelmischung nach Anspruch 1 bis 5, dadurch gekennzeichnet, daß die Komponente B ein Polyacrylatharz aus den folgenden Monomeren ist:

| | | |
|---|---|---|
| a) | 10—50 Gew.-% | Acrylsäurealkylester mit 1 bis 18 Kohlenstoffatomen im Alkylrest und/oder Methacrylsäureester mit 2 bis 18 Kohlenstoffatomen im Alkylrest, |
| b) | 0—60 Gew.-% | Methacrylsäuremethylester, |
| c) | 0—35 Gew.-% | Styrol, α-Methylstyrol, o- und/oder p-Chlorstyrol, p-tert.Butylstyrol, Vinyltoluol und/oder Vinylcarbazol und |
| d) | 2—35 Gew.-% | Acrylsäure- und/oder Methacrylsäure-β-Hydroxyalkylester oder einer anderen β-Hydroxylalkylestergruppen enthaltenden, olefinischen, ungesättigten, polymerisierbaren Verbindung, wobei die Summe der Bestandteile a, b, c und d 100% beträgt. |

7. Bindemittelmischung nach Anspruch 1 bis 6, dadurch gekennzeichnet, daß sie in feinteiliger, fester Form vorliegt.
8. Bindemittelmischung nach Anspruch 1 bis 6, dadurch gekennzeichnet, daß sie gelöst in einem organischen Lösungsmittel vorliegt.
9. Bindemittelmischung nach Anspruch 1 bis 6, dadurch gekennzeichnet, daß sie nach Protonisierung mit Säure in Form einer wäßrigen Lösung oder Dispersion vorliegt.
10. Verfahren zum Herstellen von Überzügen durch Aufbringen eines Überzugsmittels auf ein Substrat in Form eines Filmes und anschließendes Aushärten des Filmes durch Einbrennen, wobei das Überzugsmittel eine Bindemittelmischung enthält, dadurch gekennzeichnet, daß die Mischung aus den Komponenten

A) einem organischen Harz mit primären und/oder sekundären und gegebenenfalls auch zusätzlichen tertiären Aminogruppen und
B) einem Vernetzungsmittel auf Basis einer organischen Verbindung die mindestens 2 β-Hydroxyalkylestergruppen enthält, besteht.

11. Verfahren nach Anspruch 10, dadurch gekennzeichnet, daß die Mischung zusätzlich zu den Komponenten A und B als Komponente C Pigmente, Füllstoffe, Vernetzungskatalysatoren, Korrosionsschutzinhibitoren und weitere Lackhilfsmittel enthält.
12. Verfahren nach Anspruch 10 und 11, dadurch gekennzeichnet, daß der Anteil der Komponente A 50—95 Gew.-% und der der Komponente B 5—50 Gew.-% betragen, wobei die Summe der Komponenten A und B 100% beträgt.
13. Verfahren nach Anspruch 10 bis 12, dadurch gekennzeichnet, daß die Komponente A eine zahlenmittlere Molmasse von 500—20 000 aufweist.
14. Verfahren nach Anspruch 10 bis 13, dadurch gekennzeichnet, daß die Komponente B eine zahlenmittlere Molmasse von 200—10 000 aufweist.
15. Verfahren nach Anspruch 10 bis 14, dadurch gekennzeichnet, daß die Komponente B ein Polyacrylatharz aus den folgenden Monomeren ist:

| | | |
|---|---|---|
| a) | 10—50 Gew.-% | Acrylsäurealkylester mit 1 bis 18 Kohlenstoffatomen im Alkylrest und/oder Methacrylsäureester mit 2 bis 18 Kohlenstoffatomen im Alkylrest, |
| b) | 0—60 Gew.-% | Methacrylsäuremethylester, |

c) 0—35 Gew.-% Styrol, α-Methylstyrol, o- und/oder p-Chlorstyrol, p-tert.-Butylstyrol, Vinyltoluol und/oder Vinylcarbazol und

d) 2—35 Gew.-% Acrylsäure- und/oder Methacrylsäure-β-Hydroxylalkylester oder einer anderen β-Hydroxylalkylestergruppen enthaltenden, olefinischen ungesättigten, polymerisierbaren Verbindung, wobei die Summe der Bestandteile a, b, c und d 100% beträgt.

16. Verfahren nach Anspruch 10 bis 15, dadurch gekennzeichnet, daß das Überzugsmittel in feinteiliger, fester Form vorliegt.

17. Verfahren nach Anspruch 16, dadurch gekennzeichnet, daß das Aufbringen des Überzugsmittels durch eine elektrostatische Pulversprüheinrichtung erfolgt.

18. Verfahren nach Anspruch 10 bis 15, dadurch gekennzeichnet, daß die Bindemittelmischung gelöst in einem organischen Lösungsmittel vorliegt.

19. Verfahren nach Anspruch 18, dadurch gekennzeichnet, daß das Aufbringen des Überzugsmittels durch Spritzen, Tauchen, Fluten, Walzen, Rakeln oder dergleichen erfolgt.

20. Verfahren nach Anspruch 10 bis 15, dadurch gekennzeichnet, daß ein elektrisch leitendes Substrat in ein wäßriges Bad des mindestens teilweise durch Säure neutralisierten Überzugsmittels, das gegebenenfalls zusätzlich organische Lösungsmittel enthält, eingetaucht und als Kathode geschaltet wird, der Film mittels Gleichstrom auf dem Substrat abgeschieden wird, das Substrat aus dem Bad entfernt wird und der Film durch Einbrennen gehärtet wird.

21. Verwendung einer Bindemittelmischung gemäß den Ansprüchen 1 bis 9 für die Herstellung von Überzügen.

## Claims

1. A heat-hardenable binder mixture based on organic resins, characterized in that it consists of the components

A) an organic resin having primary and/or secondary and, if appropriate, also additional tertiary amino groups and

B) a crosslinking agent based on an organic compound containing at least 2 β-hydroxyalkyl ester groups.

2. A binder mixture according to claim 1, characterized in that, in addition to the components A and B, pigments, fillers, crosslinking catalysts, corrosion inhibitors and other paint auxiliaries are present as component C.

3. A binder mixture according to claims 1 and 2, characterized in that the proportion of component A is 50—95% by weight and of component B 5—50% by weight, the total amount of the components A and B being 100%.

4. A binder mixture according to claims 1 to 3, characterized in that component A has a number average molecular weight of 500—20 000.

5. A binder mixture according to claims 1 to 4, characterized in that component B has a number average molecular weight of 200—10 000.

6. A binder mixture according to claims 1 to 5, characterized in that component B is a polyacrylate resin formed from the following monomers:

a) 10—50% by weight of an alkyl acrylate having 1 to 18 carbon atoms in the alkyl radical and/or methacrylic acid ester having 2 to 18 carbon atoms in the alkyl radical,

b) 0—60% by weight of methyl methacrylate,

c) 0—35% by weight of styrene, α-methylstyrene, o- and/or p-chlorostyrene, p-tert.-butylstyrene, vinyltoluene and/or vinylcarbazole and

d) 2—35% by weight of a β-hydroxyalkyl acrylate and/or methacrylate or of another olefinic, unsaturated polymerisable compound containing β-hydroxyalkyl ester groups, the total amount of the constituents a, b, c and d being 100%.

7. A binder mixture according to claims 1 to 6, which is present in a finely divided, solid form.

8. A binder mixture according to claims 1 to 6, which is present dissolved in an organic solvent.

9. A binder mixture according to claims 1 to 6, which, after protonation with acid, is present in the form of an aqueous solution or dispersion.

10. A process for preparing coatings by applying a coating agent in the form of a film to a substrate and subsequently hardening the film by stoving, which coating agent contains a binder mixture, which process comprises using a mixture of the components

A) an organic resin having primary and/or secondary and, is appropriate, also additional tertiary amino groups and
B) a crosslinking agent based on an organic compound which contains at least 2 β-hydroxyalkyl ester groups.

11. A process according to claim 10, characterized in that the mixture, in addition to the components A and B, contains as component C pigments, fillers, crosslinking catalysts, corrosion inhibitors and other paint auxiliaries.
12. A process according to claims 10 and 11, characterized in that the proportion of component A is 50—95% by weight and of component B 5—50% by weight, the total amount of the components A and B being 100%.
13. A process according to claims 10 to 12, characterized in that the component A has a number average molecular weight of 500—20 000.
14. A process according to claims 10 to 13, characterized in that the component B has a number average molecular weight of 200—10 000.
15. A process according to claims 10 to 14, characterized in that component B is a polyacrylate resin formed from the following monomers:

a) 10—50% by weight of an alkyl acrylate having 1 to 18 carbon atoms in the alkyl radical and/or methacrylic acid ester having 2 to 18 carbon atoms in the alkyl radical,
b) 0—60% by weight of methyl methacrylate,
c) 0—35% by weight of styrene, α-methylstyrene, o- and/or p-chlorostyrene, p-tert.butylstyrene, vinyltoluene and/or vinylcarbazole and
d) 2—35% by weight of a β-hydroxyalkyl acrylate and/or methacrylate or of another olefinic, unsaturated polymerisable compound containing β-hydroxyalkyl ester groups, the total amount of the constituents a, b, c and d being 100%.

16. A process according to claims 10 to 15, characterized in that the coating agent is present in a finely divided, solid form.
17. A process according to claim 16, characterized in that the coating agent is applied by using an electrostatic power spray device.
18. A process according to claims 10 to 15, characterized in that the binder mixture is present dissolved in an organic solvent.
19. A process according to claim 18, characterized in that the coating agent is applied by spraying, dipping, flowing, rolling, knife-coating or the like.
20. A process according to claims 10 to 15, characterized in that an electrically conductive substrate is dipped into an aqueous bath of the coating agent which is at least partially neutralised by acid and which bath can, if appropriate, contain additional organic solvents, and connected as the cathode, the film is deposited on the substrate by means of direct current, the substrate is removed from the bath and the film is hardened by stoving.
21. The use of a binder mixture according to claims 1 to 9, for preparing coatings.

**Revendications**

1. Mélange de liants thermodurcissable à base de résines organiques, caractérisé en ce qu'il comprend les composants:

A) une résine organique possédant des groupes aminoprimaires et/ou secondaires et éventuellement également en supplément, tertiaires, et
B) un agent de réticulation à base d'un composé organique qui contient au moins deux groupes β-hydroxy-alkylesters.

2. Mélange de liants selon la revendication 1, caractérisé en ce qu'il contient, en supplément des composants A et B, comme composant C, des pigments, charges, catalyseurs de réticulation, inhibiteurs protecteurs contre la corrosion et autres adjuvants de peinture.
3. Mélange de liants selon l'une des revendications 1 et 2, caractérisé en ce que la proportion du composant A est de 50 à 95% et celle du composant B de 5 à 50% en poids, la somme des composants A et B étant de 100%.
4. Mélange de liants selon l'une des revendications 1 à 3, caractérisé en ce que le composant A a une masse moléculaire moyenne en nombre de 500 à 20 000.
5. Mélange de liants selon les revendications 1 à 4, caractérisé en ce que le composant B a une masse moléculaire moyenne en nombre de 200 à 10 000.
6. Mélange de liants selon l'une des revendications 1 à 5, caractérisé en ce que le composant B est une résine polyacrylate issue des monomères suivants:

a) 10 à 50% d'un alkylester de l'acide acrylique comprenant 1 à 18 atomes de carbone dans le radical alkyle et/ou un ester de l'acide méthacrylique comprenant 2 à 18 atomes de carbone dans le radical alkyle,
b) 0 à 60% en poids de méthylester de l'acide méthacrylique,
c) 0 à 35% en poids de styrène, de $\alpha$-méthylstyrène, de o et/ou p-chlorostyrène, de p-tert.-butylstyrène, de vinyltoluène et/ou de vinylcarbazol, et
d) 2 à 35% en poids d'un $\beta$-hydroxyalkylester de l'acide acrylique et/ou méthacrylique, ou un autre composé oléfinique, insaturé, polymérisable, contenant des groupes $\beta$-hydroxyalkylesters, la somme des constituants a, b, c et d étant de 100%.

7. Mélange de liants selon l'une des revendications 1 à 6, caractérisé en ce qu'il se présente sous la forme solide, finement divisé.

8. Mélange de liants selon l'une des revendications 1 à 6, caractérisé en ce qu'il se présente en solution dans un solvant organique.

9. Mélange de liants selon l'une des revendications 1 à 6, caractérisé en ce que, après protonisation à l'acide, il se présente sous la forme d'une solution ou dispersion aqueuse.

10. Procédé de préparation de revêtements par dépôt d'un agent de revêtement sur un substrat sous la forme d'un film et durcissement consécutif du film par cuisson, l'agent de revêtement contenant un mélange de liants, caractérisé en ce que le mélange comprend les composants:

A) une résine organique possédant des groupes amino primaires et/ou secondaires et éventuellement également en supplément, tertiaires, et
B) un agent de réticulation à base d'un composé organique qui contient au moins deux groupes $\beta$-hydroxy-alkylesters.

11. Procédé selon la revendication 10, caractérisé en ce que le mélange contient, en supplément des composants A et B, comme composant C, des pigments, charges, catalyseurs de réticulation, inhibiteurs protecteurs contre la corrosion et autres adjuvants de peinture.

12. Procédé selon l'une des revendications 10 et 11, caractérisé en ce que la proportion du composant A et de 50 à 85% et celle du composant B de 5 à 50% en poids, la somme des composants A et B étant de 100%.

13. Procédé selon l'une des revendications 10 à 12, caractérisé en ce que le composant A présente une masse moléculaire moyenne en nombre de 500 à 20 000.

14. Procédé selon l'une des revendications 10 à 13, caractérisé en ce que le composant B possède une masse moléculaire moyenne en chiffre de 200 à 10 000.

15. Procédé selon l'une des revendications 10 à 14, caractérisé en ce que le composant B est une résine polyacrylate issue des monomères suivants:

a) 10 à 50% en poids d'un alkylester de l'acide acrylique comprenant 1 à 18 atomes de carbone dans le radical alkyle et/ou un ester de l'acide méthacrylique comprenant 2 à 18 atomes de carbone dans le radical alkyle,
b) 0 à 60% en poids de méthylester de l'acide méthacrylique,
c) 0 à 35% en poids de styrène, de $\alpha$-méthylstyrène, de o et/ou p-chlorostyrène, de p-tert.-butylstyrène, vinyltoluène et/ou de vinylcarbazol, et
d) 2 à 35% en poids d'un $\beta$-hydroxyalkylester de l'acide acrylique et/ou méthacrylique, ou un autre composé oléfinique, insaturé, polymérisable, contenant des groupes $\beta$-hydroxyalkylester, la somme des constituants a, b, c et d étant de 100%.

16. Procédé selon l'une des revendications 10 à 15, caractérisé en ce que l'agent de revêtement se présente sous une forme solide, finement divisé.

17. Procédé selon la revendication 16, caractérisé en ce que l'application de l'agent de revêtement s'effectue à l'aide d'un dispositif de projection de poudre électrostatique.

18. Procédé selon l'une des revendications 10 à 15, caractérisé en ce que le mélange de liants se présente en dissolution dans un solvant organique.

19. Procédé selon la revendication 18, caractérisé en ce que l'application de l'agent de revêtement s'effectue par projection, immersion, noyage, calandrage, étalement à la racle ou équivalent.

20. Procédé selon l'une des revendications 10 à 15, caractérisé en ce qu'il consiste à plonger un substrat électroconducteur dans un bain aqueux de l'agent de revêtement, au moins partiellement neutralisé par de l'acide, qui contient éventuellement en supplément des solvants organiques, à le connecter en cathode, à précipiter le film sur le substrat au moyen d'un courant continu, à extraire le substrat du bain et à durcir le film par cuisson.

21. Emploi d'un mélange de liants selon l'une des revendications 1 à 9 pour la production de revêtements.